# EUROPEAN PATENT APPLICATION

(11) **EP 2 484 551 A1**
(43) Date of publication of application: **08.08.2012**
(21) Application number: 11193723.1
(22) Date of filing: 15.12.2011
(51) Int. Cl.: B60P 3/40

(54) **Transportation device for a wind turbine component and method of using same**

(30) Priority: 07.02.2011 DK 201170068; 07.02.2011 US 201113440045
(71) Applicant: Vestas Wind Systems A/S, 8200 Aarhus N (DK)
(72) Inventor: Pedersen, Gunnar K. Storgaard, 6900 Skjern (DK)

(57) **Abstract**

A method of transporting a wind turbine component on an existing road includes loading the wind turbine component on a transportation device in a first orientation using the transportation device, reorienting the component to a second orientation while mounted on the transportation device, and using the transportation device to transport the component on the road. The transportation device includes a trailer having a front portion and a rear portion, each including a fixed frame, a movable frame, lift actuators, and a connecting member configured to be coupled to the component. A drive system is provided for rotating the component when mounted on the transportation device.

## Description

### Technical Field

This application relates generally to wind turbines, and more particularly to a device for transporting a wind turbine component and a related method wherein the wind turbine component may be rotated when mounted on the transportation device.

### Background

In a typical on-shore wind turbine installation, various components of the wind turbine, such as, for example, the nacelle, tower or tower sections, rotor hub, rotor blades, etc., may be transported to the installation site separately and then assembled together on site so as to result in an operational wind turbine. In this regard, due to the relatively large size of some of these components, the transportation thereof is typically carried out using one or more tractor trailers, which travel along the existing network of roads, highways, expressways, etc. (collectively referred to herein as roads) to the installation site. Additionally, in off-shore wind turbine installations, which can be significantly larger than on-shore installations, wind turbine components are typically transported using tractor trailers on the existing network of roads from a factory, for example, to quayside where the components may be loaded onto boats for transport to the off-shore installation site.

Many of the existing roads used in the transportation of wind turbine components are divided into lanes so as to accommodate other vehicles moving in, for example, the same direction or an opposing direction, and may further have a shoulder on the sides of the outer most lanes. These lanes have a certain width that, in the normal course, accommodates most of the traffic on the road. Moreover, in many countries, regions, etc., various road signage is located just off the shoulders for aiding, informing, guiding, etc. those traveling on the road. In many instances, the distance between the inner boundary of the outer lane and the road signage may be between 5 to 6 meters. This distance then represents the maximum width of a vehicle (or a load carried by the vehicle) that may travel on the road without obstructing vehicles traveling in an adjacent lane and without damaging or otherwise destroying the road signage adjacent the road.

Wind turbine hubs are typically transported to an installation site or quayside on a tractor trailer. More particularly, the hub is typically loaded on a tractor trailer and secured thereto in a fixed position so that the hub does not essentially move during transit. Heretofore, the size of the wind turbine hub has not been so prohibitively large that transportation of the hub has been particularly problematic using the existing network of roads. However, the trend in wind turbine construction has been for the power output and physical size of the wind turbine to scale upward. Accordingly, it is expected that for wind turbine designs moving forward, the rotor hub may have height, length, and/or width dimensions that make the transportation thereof to the installation site or quayside on the existing network of roads more problematic. For example, the dimensions may make it such that the hub may not be transported on a tractor trailer using the existing network of roads without a significant risk of interfering with adjacent traffic and/or damaging road signage.

Thus, there is a need for a transportation device and associated methods that allow large-scale rotor hubs to be transported to wind turbine installation sites or quayside via the existing network of roads without unduly interfering with adjacent traffic and potentially damaging or destroying road signage adjacent the road.

### Summary

To address these and other shortcomings, a method of transporting a wind turbine component to, for example, an installation site or quayside using an existing network of roads includes loading the wind turbine component on a transportation device using the transportation device, wherein the wind turbine component has a first orientation when loaded on the transportation device; reorienting the wind turbine component to a second orientation while the wind turbine component is mounted on the transportation device; and using the transportation device to transport the wind turbine component via the existing network of roads. The reorienting step may occur prior to or during transportation of the wind turbine component. Moreover, in an exemplary embodiment, the wind turbine component may be a rotor hub.

In accordance with embodiments of the inventive method, the transportation device may be coupled to the wind turbine component when the component is in a storage position on, for example, a support surface. Subsequently, the transportation device may be used to move the component to a raised position off the support surface. In one embodiment, the reorienting may be achieved by rotating the wind turbine component about a rotation axis. The rotation may be achieved by a) raising the wind turbine component using the transportation device; b) locating an obstacle under a portion of the wind turbine component; c) lowering the wind turbine component using the transportation device so that the portion of the component contacts the obstacle; and d) further lowering the wind turbine component using the transportation device to effectuate rotation of the wind turbine component about the rotation axis. These steps may be repeated any number of times to rotate the wind turbine component at least a portion of the way from the first orientation to the second orientation. In an alternative embodiment, a drive system may be used to effectuate rotation of the wind turbine component about the rotation axis.

In one embodiment, the wind turbine component has a minimum height, length or width dimension and the second orientation is characterized by having the minimum dimension of the wind turbine component in a direction generally parallel to a working width of the road. The minimum dimension of the wind turbine may be, for example, the height dimension. In an alternative embodiment, the second orientation is characterized by having the widest portion of the wind turbine component at the highest vertical position when viewed from a front or rear perspective. In yet another embodiment, the road may include a working width and the wind turbine component includes at least one dimension less than the working width of the road. In this case, the second orientation is characterized by having the at least one dimension of the wind turbine component generally parallel to the working width of the road.

In a further aspect of the invention, the method may include reorienting the wind turbine component to a third orientation while the wind turbine component is mounted on the transportation device. The method may further include unloading the wind turbine component from the transportation device using the transportation device. The third orientation may be the same as the first orientation, for example.

A transportation device for transporting a wind turbine component using an existing network of roads includes a trailer having a front trailer portion and a rear trailer portion. Each of the front and rear trailer portions includes a fixed frame having a plurality of wheels; a movable frame coupled to the fixed frame; lift actuators for moving the movable frame relative to the fixed frame; and a connecting member coupled to the movable frame and configured to be coupled to the wind turbine component. The transportation device further includes a drive system for rotating the wind turbine component about a rotation axis when the wind turbine component is mounted on the transportation device.

In this embodiment, each of the connecting members may include a support hub configured to be received in a bore of the wind turbine component, and a shaft extending away from the support hub and configured to be coupled to the shaft from the other trailer portion when the wind turbine component is mounted to the transportation device. Moreover, the transportation device may include a tractor configured to be coupled to the trailer for pulling the trailer over the existing network of roads. Furthermore, the transportation device may include a controller operatively coupled to the drive system for controlling the rotation of the wind turbine component. The lift actuators on the front and rear trailer portions may also be operatively coupled to the controller for controlling the raising and lowering of the wind turbine component.

A method of transporting a wind turbine component using an existing network of roads includes obtaining a transportation device including a trailer having a front trailer portion and a rear trailer portion. Each of the front and rear trailer portions includes a fixed frame having a plurality of wheels; a movable frame coupled to the fixed frame; a first and second lift actuator for moving the movable frame relative to the fixed frame; and a connecting member coupled to the movable frame and configured to be coupled to the wind turbine component. The method further includes actuating the second lift actuators to move each of the connecting members to a lowered position and coupling each of the connecting members to the wind turbine component when in the lowered position. The wind turbine component has a first orientation when it is coupled to each of the connecting members. The first lift actuators may then be actuated to move each of the connecting members and the wind turbine component coupled thereto to a raised position. The wind turbine component may then be rotated about a rotation axis to a second orientation. This is done while the wind turbine component is mounted on the transportation device. The transportation device may then be used to transport the wind turbine component via the existing network of roads.

### Brief Description of the Drawings

The accompanying drawings, which are incorporated in and constitute a part of this specification, illustrate various embodiments of the invention and, together with a general description of the invention given above and the detailed description of the embodiments given below, serve to explain the embodiments of the invention.

Fig. 1 is a diagrammatic view of a wind turbine;

Fig. 2 is a perspective view of an upper portion of the wind turbine of Fig. 1;

Figs. 3A-3C are a side plan view, a top plan view, and a front plan view, respectively, of a rotor hub;

Figs. 4A-4E are a sequence of side plan views of a transportation device implementing a method for transporting a wind turbine component in accordance with an embodiment of the invention;

Figs. 5A-5D are a sequence of rear plan views of a transportation device implementing a method for rotating the wind turbine component in accordance with one embodiment of the invention;

Fig. 6 is a partial rear plan view of a transportation device implementing a method for rotating the wind turbine component in accordance with another embodiment of the invention; and

Figs. 7A and 7B are rear plan views of the wind turbine component in a second orientation in accordance with embodiments of the invention.

### Detailed Description

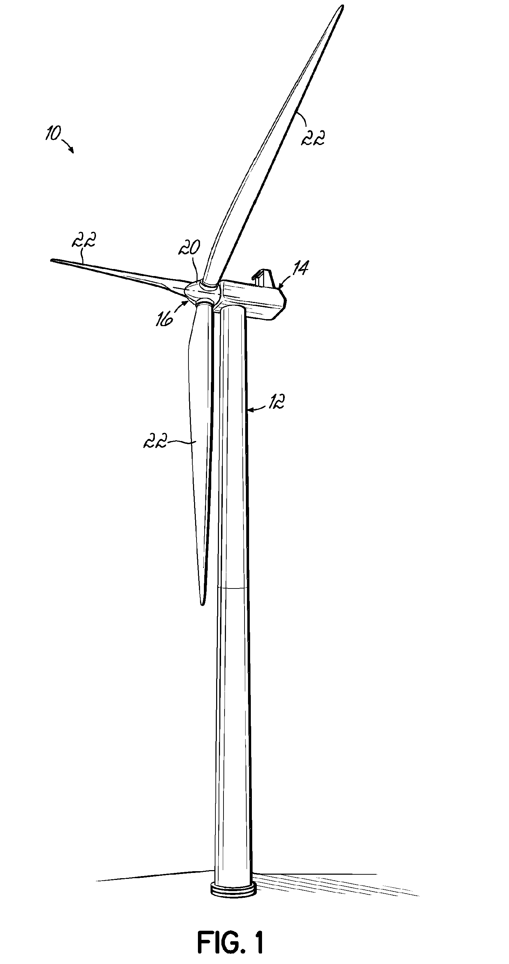

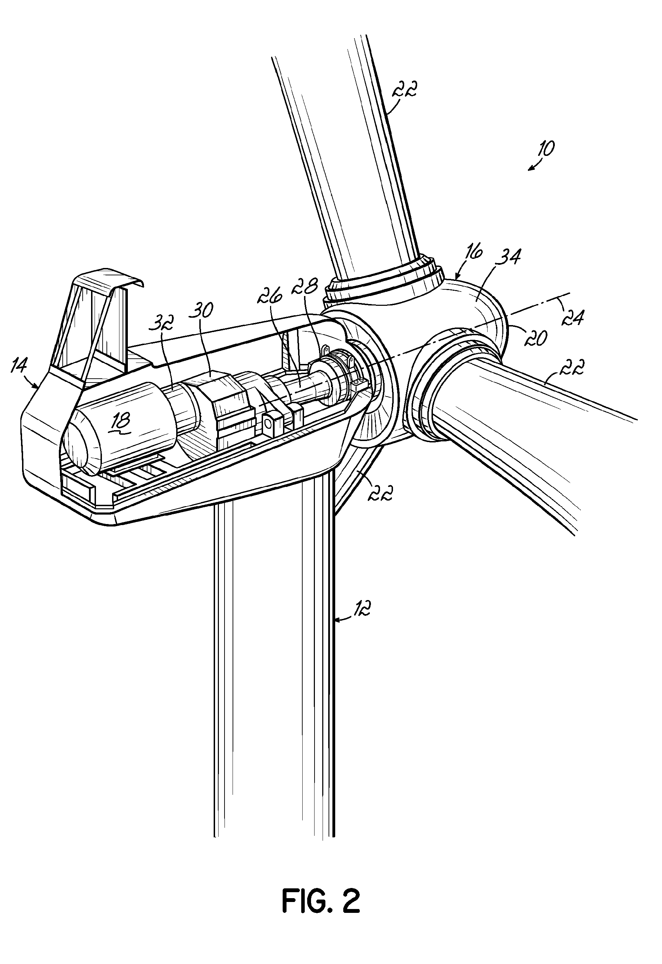

With reference to Figs. 1 and 2 and in accordance with an embodiment of the invention, a wind turbine 10 includes a tower 12, a nacelle 14 disposed at the apex of the tower 12, and a rotor 16 operatively coupled to a generator 18 housed inside the nacelle 14. In addition to the generator 18, the nacelle 14 houses miscellaneous components required for converting wind energy into electrical energy and various components needed to operate, control, and optimize the performance of the wind turbine 10. The tower 12 supports the load presented by the nacelle 14, the rotor 16, and other components of the wind turbine 10 that are housed inside the nacelle 14, and also operates to elevate the nacelle 14 and rotor 16 to a height above ground level or sea level, as may be the case, at which faster moving air currents of lower turbulence are typically found.

The rotor 16 of the wind turbine 10, which is represented as a horizontal-axis wind turbine, serves as the prime mover for the electromechanical system. Wind exceeding a minimum level will activate the rotor 16 and cause rotation in a direction substantially perpendicular to the wind direction. The rotor 16 of wind turbine 10 includes a central hub 20 and at least one blade 22 that projects outwardly from the central hub 20. In the representative embodiment, the rotor 16 includes three blades 22 at locations circumferentially distributed thereabout, but the number may vary. The blades 22 are configured to interact with the passing air flow to produce lift that causes the central hub 20 to spin about a longitudinal axis 24. The design and construction of the blades 22 are familiar to a person having ordinary skill in the art and will not be further described.

The rotor 16 is mounted on an end of a main rotary shaft 26 that extends into the nacelle 14 and is rotatably supported therein by a main bearing assembly 28 coupled to the framework of the nacelle 14. The main rotary shaft 26 is coupled to a gearbox 30 having as an input the relatively low angular velocity main rotary shaft 26, and having as an output a higher angular velocity secondary rotary shaft 32 that is operatively coupled to the generator 18.

The wind turbine 10 may be included among a collection of similar wind turbines belonging to a wind farm or wind park that serves as a power generating plant connected by transmission lines with a power grid, such as a three-phase alternating current (AC) power grid. The power grid generally consists of a network of power stations, transmission circuits, and substations coupled by a network of transmission lines that transmit the power to loads in the form of end users and other customers of electrical utilities. Under normal circumstances, the electrical power is supplied from the generator 18 to the power grid as known to a person having ordinary skill in the art.

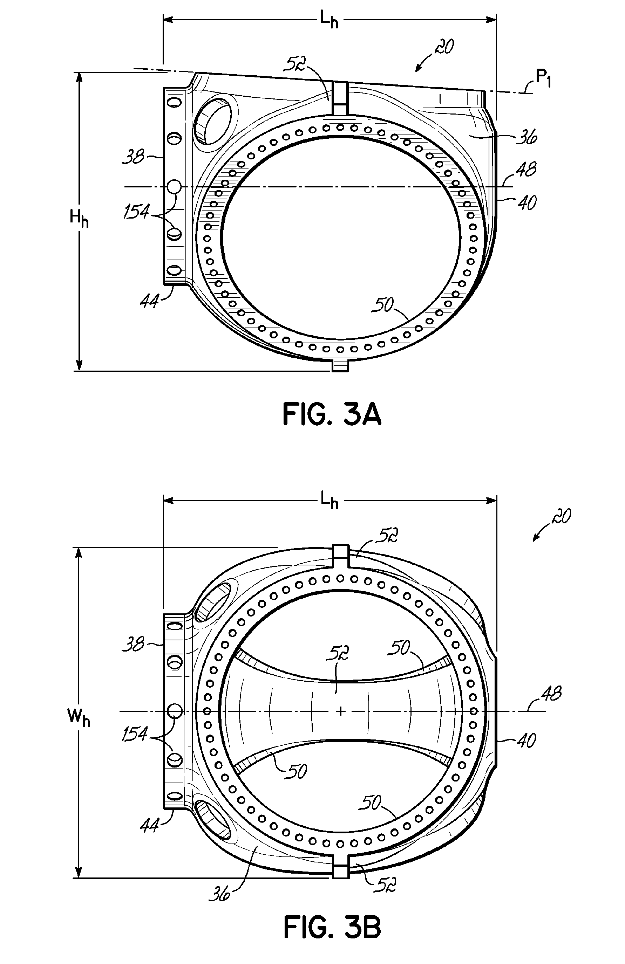

Figs. 3A-3C illustrate an exemplary embodiment of a rotor hub 20. Although typically shielded from view by a shroud 34 (Fig. 2), a hub 20 may broadly be described as a generally spherical body 36 having an inner end 38 and an opposed outer end 40. The inner end 38 of the hub 20 is configured to be coupled to the nacelle 14, such as through rotary shaft 26, and the outer end 40 is configured to face away from the nacelle 14 when the hub 20 is coupled thereto. A generally circular bore 42 may be formed through the wall of body 36 at the inner end 38 to facilitate coupling of the hub 20 to the nacelle 14. In this regard, the bore 42 may receive the rotary shaft 26 therein and include a flange 44 thereabout for securing the hub 20 to the shaft 26, such as with bolts or other fasteners (not shown). Moreover, a generally circular bore 46 may be formed through the wall of body 36 at the outer end 40 as well, such that bores 42, 46 are generally aligned along an axis 48. The purpose of bore 46 will be described in greater detail below.

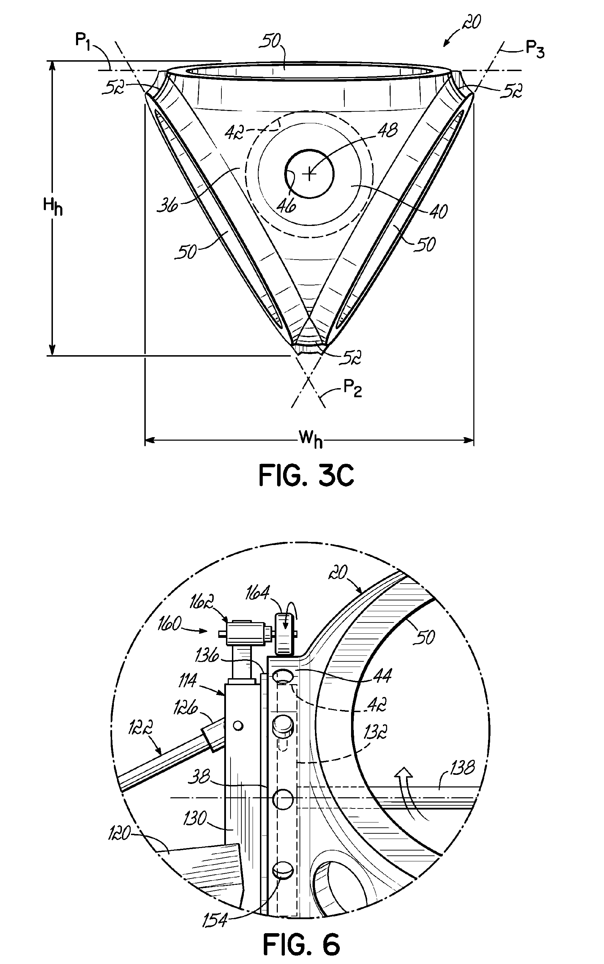

The generally spherical body 36 is truncated along three planes P₁, P₂, and P₃ such that the hub 20 has a generally triangular configuration when viewed from the front or rear (Fig. 3C). A generally circular bore 50 may be formed through the wall of body 36 so as to generally lie in or be parallel to each of the planes P₁, P₂, and P₃. The bore 50 occupies a significant portion of each of the planar surfaces P₁, P₂ and P₃ such that effectively three equally spaced, generally arcuate spines 52 extend between the inner and outer ends 38, 40. Each of the bores 50 is configured to receive a respective blade 22 therein. The body 36 of hub 20 may include other openings or apertures as well that may facilitate other purposes and which form no part of the present invention.

The particular configuration of hub 20 as described above, and as is the case in typical hub designs, results in an irregular, and perhaps somewhat awkward, shape to the hub 20. For example, it may be the case that the hub 20 has a length Lₕ, a width Wₕ, and a height Hₕ that are different from each other. As is noted above, it is expected that as hub designs advance, one or more of these dimensions will be on the order of 5-6 meters, or even higher.
It is typical, however, that one of the dimensions will generally be less than the other dimensions. For example, the height dimension Hₕ may be less than, and perhaps significantly less than, the length and width dimensions Lₕ, Wₕ, respectively. In this regard, it is expected that the height dimension Hₕ may be on the order of about one-half meter (0.5 meter), or perhaps even more, less than the other dimensions of hub 20. It should be realized, however, that aspects of the invention are not limited to a hub or other wind turbine component having the dimensions described above. For example, aspects of the invention may prove beneficial to wind turbine components having other dimensional relationships, including where the length, width and height dimensions are essentially equal.

In accordance with one aspect of the invention, this reduction in one of the dimensions (e.g., the height dimension Hₕ) may be used in an advantageous way during the transportation of the hub 20 to a wind turbine installation site or quayside using, for example, a tractor trailer on the existing network of roads. As noted above, the working width of the road, which may be the maximum width of the road that stretches from the boundary of a lane adjacent traffic to the road signage opposite thereto and in a direction generally parallel to the road, may be on the order of about 5-6 meters. For example, the working width of the road may be in a generally horizontal direction. The dimensions of hub 20 are currently, or soon will be, approaching these values. However, if the orientation of the hub 20 during transportation is such that the minimum hub dimension, such as the height dimension Hₕ, is generally parallel to the working width of the road, then the margin for error may be maximized. For example, the margin for error may be measured by the difference between the working width of the road and the dimension of the hub 20 in a direction generally parallel to the working width of the road. Stated another way, when the hub 20 is in such an orientation, the potential for interfering with adjacent traffic and/or damaging road signage has been reduced. It is anticipated that in some cases, the hub 20 may have dimensions such that the hub 20 may only be transported on the existing network of roads (without undue interference to adjacent traffic and/or damage to adjacent road signage) when the hub 20 is in this specific orientation.

In addition to the above, there may also be other orientations of the hub 20 during transportation that may minimize or reduce the potential for interfering with adjacent traffic and/or damaging the road signage. For example, as best illustrated in Fig. 3C, the horizontal cross dimension of the hub 20 varies in the vertical direction. In one orientation, the maximum width of the hub 20 may be located at the upper most vertical position (e.g., this is the orientation shown in Fig. 3C). Depending on the height of the hub 20 above the road during transportation, if the hub 20 is oriented such that the maximum width of the hub 20 is at the upper most vertical position, the wider portions of the hub 20 may be higher than most of the road signage and higher than most vehicles in an adjacent lane. This orientation then might also prove beneficial in some instances.

While the orientation of the hub 20 during transportation is an important factor to consider, it is not the only factor when contemplating a transportation device or system. In this regard, any such transportation device should take into account the loading and/or the unloading of the hub 20. For example, prior to loading onto a transportation device, the hub 20 may be located at a production facility, quayside or at some other location. More than likely, the hub 20 will be located on a support surface 54 such as the ground, a platform, or some other surface, in a stable orientation (i.e., one that will not fall over or otherwise present safety concerns).

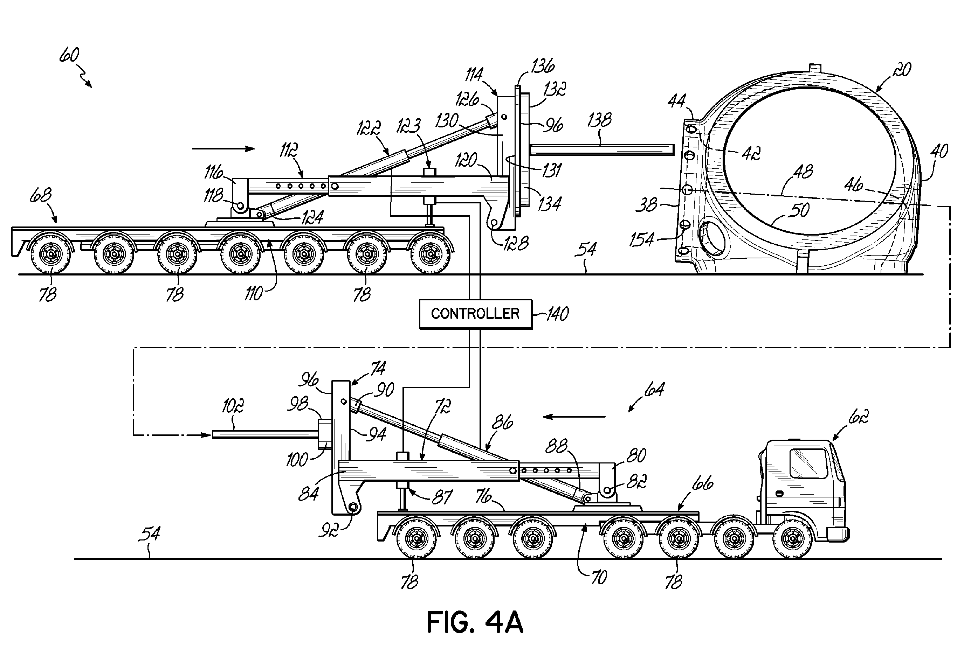

Given the current designs, rotor hubs are likely to be stored or otherwise readied for transport in an orientation shown in, for example, Figs. 4A-4C, wherein a hub surface defined by one of the planes P₁, P₂, and P₃ faces and contacts the support surface 54 from which the hub 20 will be loaded for transport. Such an orientation may be referred to as a first, load orientation, which may be, for example, a storage or other generally stable orientation of hub 20. In the first orientation, the axis 48 that extends through aligned bores 42, 46 in the inner and outer ends 38, 40, respectively, is nearly parallel to, but spaced from the support surface 54 on which the hub 20 is supported. For example, as shown in Figs. 4A-4C, the axis 48 may be slightly angled with respect to the support surface 54 due to the planes P₁, P₂, and P₃ (e.g., plane P₁) being slightly angled relative to axis 48 (see Fig. 3A).

It should be realized, however, that the first, load orientation may not be the optimal orientation in which to transport the hub 20 on a tractor trailer and along the existing network of roads. In other words, when the hub 20 is in its first orientation, the minimum dimension of hub 20, such as the height dimension, may not generally be parallel to the working width of the road (e.g., horizontal). Thus, the hub 20 will have to be rotated about axis 48 such that the minimum dimension of the hub 20 will be generally parallel to the working width of the road. The orientation of the hub 20 in this position may be referred to as a second, transport orientation. The hub 20 may also include a third, transport orientation wherein the maximum width of the hub 20 is located at the upper most vertical position of the hub 20. Of course, there may be additional orientations of the hub 20 which may prove beneficial, depending on, for example, the particular circumstances during transport thereof. In any event, aspects of the invention are directed to rotating a wind turbine component, such as hub 20, from a first orientation to a second orientation so as to minimize the potential for disruption of adjacent traffic and damage to adjacent road signage.

The present inventor previously invented a transportation device for transporting a wind turbine component. That previous invention was fully described in U.S. Patent No. 7,775,753 ("the '753 patent"), the disclosure of which is incorporated by reference herein in its entirety. While the transportation device shown and described in the '753 patent operates well and fulfills its intended purpose, the transportation device disclosed therein does not have the capability of rotating a wind turbine component, such as from the first orientation to the second orientation. More particularly, the transportation device described in the '753 patent is not capable of rotating the wind turbine component while the component is loaded on the transportation device. Aspects of the present invention address these and other shortcomings of the previous transportation device. More particularly, aspects of the present invention are directed to a transportation device that provides for not only loading and/or unloading of a wind turbine component using the transportation device, but also provide rotation of the wind turbine component, such as hub 20, while the component is coupled to the transportation device.

Figs. 4A-4D illustrate a transportation device, generally shown at 60, in accordance with one embodiment of the invention. In an exemplary embodiment, the transportation device 60 may take the form of a tractor trailer having a tractor 62 and a trailer 64 configured to carry the wind turbine hub 20 in accordance with a method described in more detail below. The design of trailer 64 is similar to that disclosed in the '753 patent. In this regard, the trailer 64 has a two-part design including a front trailer portion 66 and a rear trailer portion 68. The front trailer portion 66 includes a fixed frame 70, a movable frame 72, and a front connecting member 74. The fixed frame 70 is mountable to the tractor 62 at a front end 76 thereof by conventional means, and further includes a plurality of wheels 78 rotatably mounted thereto for supporting at least a portion of the weight of the hub 20 on the road or support surface 54.

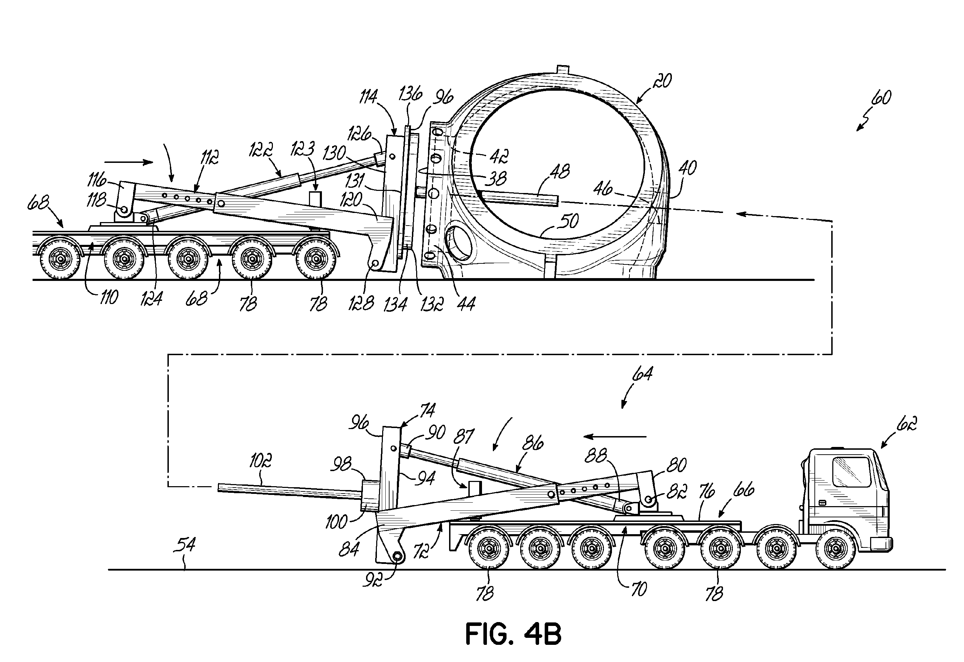

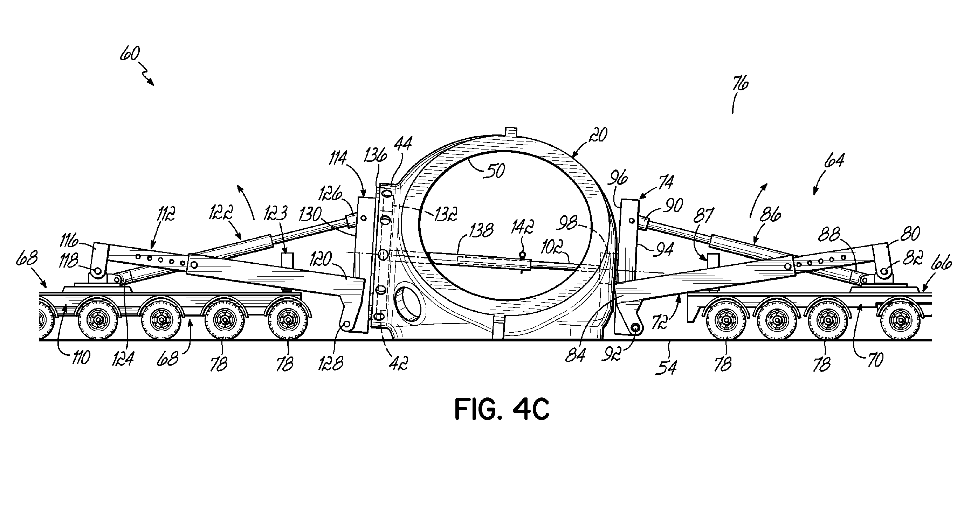

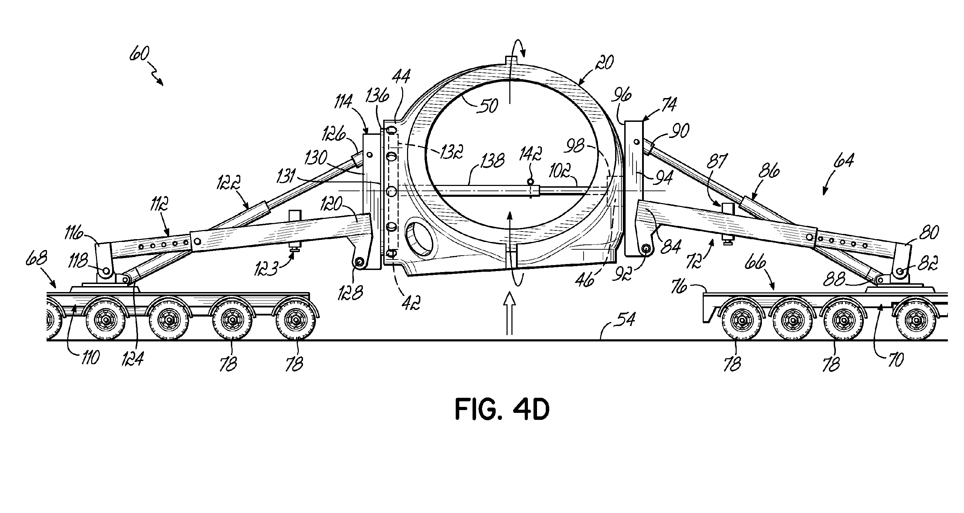

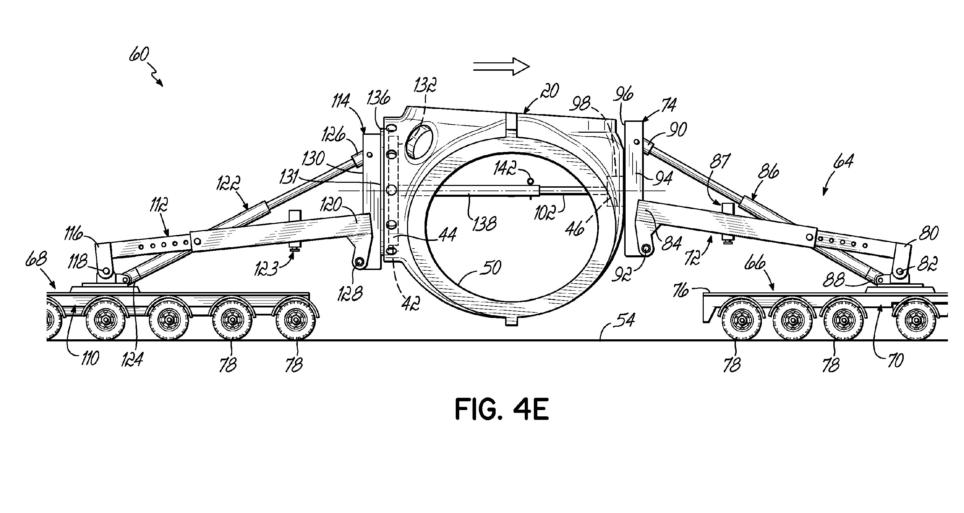

The movable frame 72 includes a front end 80 movably coupled to the fixed frame 70. For example, the movable frame 72 may be pivotally coupled to the fixed frame 70, such as along pivot axis 82 (into the page). In this way, the movable frame 72 may rotate about axis 82 between a lowered position, wherein a second end 84 of movable frame 72 is adjacent the support surface 54 (Figs. 4B and 4C), and a raised position, wherein the second end 84 of movable frame 72 has been raised generally vertically with respect to the support surface 54 (Figs. 4A, 4D and 4E).

To facilitate the movement of movable frame 72 relative to the fixed frame 70, the front trailer portion 66 may include a first or primary lift actuator 86 having a front end 88 pivotally coupled to the fixed frame 70, and a rear end 90 pivotally coupled to the front connecting member 74. The primary lift actuator 86 is capable of moving between a collapsed position and an extended position when actuated. The primary lift actuator 86 may take the form of an electric actuator, a hydraulic actuator, a pneumatic actuator, or other types of actuators suitable for the present purposes as known to those of ordinary skill in the art. The front trailer portion 66 may further include a secondary lift actuator 87 to facilitate movement of the movable frame 72 relative to the fixed frame 70. The secondary lift actuator 87 is coupled to the movable frame 72 and is similarly configured to move between a collapsed position and an extended position when actuated. The purpose of the primary and secondary lift actuators 86, 87 will be explained in more detail below.

The front connecting member 74 is coupled to the rear end 84 of the movable frame 72 and is configured to be coupled to the hub 20, as will be explained in more detail below. In one embodiment, the connecting member 74 is movably coupled to the movable frame 72. For example, the connecting member 74 may be pivotally coupled to the movable frame 72, such as along pivot axis 92 (into the page). In this way, the connecting member 74 may rotate about axis 92 and thereby allow the connecting member 74 to remain at a relatively fixed angular position relative to, for example, support surface 54, as the movable frame 72 is moving between the lowered and raised positions. The reasons for such a design are explained below. The connecting member 74 may include an arm 94 extending in a generally vertical direction and away from pivot axis 92. The rear end 90 of lift actuator 86 may be coupled to an upper end of the arm 94 so that upon actuation of primary lift actuator 86, the movable frame 72 is capable of moving relative to the fixed frame 70, as will be explained below.

A rearward facing surface 96 of the connecting member 74 includes a support hub 98 defining a support surface 100 configured to support the hub 20 when the connecting member 74 is coupled thereto. The support hub 98 may, in one embodiment, be generally cylindrical so as to correspond to the shape of bore 46 in the outer end 40 of the hub 20. It should be recognized that other shapes are possible, but that the shape of support hub 98 should generally correspond to the shape of the bore 46. The size of the support hub 98 (e.g., diameter) should be such so as to fit snugly within the bore 46 in the outer end 40 of the hub 20. The connecting member 74 further includes a generally elongated support shaft 102 extending rearwardly from the support hub 98, the purpose of which will be described in more detail below.

The rear trailer portion 68 has a similar construction and includes a fixed frame 110, a movable frame 112, and a rear connecting member 114. The fixed frame 110 includes a plurality of wheels 78 rotatably mounted thereto for supporting at least a portion of the weight of the hub 20 on the road or support surface 54. The movable frame 112 includes a rear end 116 movably coupled to the fixed frame 110. For example, the movable frame 112 may be pivotally coupled to the fixed frame 110, such as along pivot axis 118 (into the page). In this way, the movable frame 112 may rotate about axis 118 between a lowered position, wherein a front end 120 of movable frame 112 is adjacent the support surface 54 (Figs. 4B and 4C), and a raised position, wherein the front end 120 of movable frame 112 has been raised generally vertically with respect to the support surface 54 (Figs. 4A, 4D and 4E).

To facilitate the movement of movable frame 112 relative to the fixed frame 110, the rear trailer portion 68 may include a first or primary lift actuator 122, similar to actuator 86, having a rear end 124 pivotally coupled to the fixed frame 110 and a front end 126 pivotally coupled to the rear connecting member 114. The primary lift actuator 122 is capable of moving between a collapsed position and an extended position when actuated. The rear trailer portion 68 may further include a secondary lift actuator 123 to facilitate movement of the movable frame 112 relative to the fixed frame 110. The secondary lift actuator 123 is coupled to the movable frame 112 and is similarly configured to move between a collapsed position and an extended position when actuated.

The rear connecting member 114 is coupled to the front end 120 of the movable frame 112 and is configured to be coupled to the hub 20, as will be explained in more detail below. In one embodiment, the rear connecting member 114 is movably coupled to the movable frame 112. For example, the rear connecting member 114 may be pivotally coupled to the movable frame 112, such as along pivot axis 128 (into the page). In this way, the rear connecting member 114 may rotate about axis 128 and thereby allow the rear connecting member 114 to remain at a relatively fixed angular position relative to, for example, support surface 54, as the movable frame 112 is moving between the lowered and raised positions. Again, the reasons for such a design are explained below. The rear connecting member 114 may include an arm 130 extending in a generally vertical direction and away from pivot axis 128. The front end 126 of primary lift actuator 122 may be coupled to an upper end of the arm 130 so that upon actuation of lift actuator 122, the movable frame 112 is capable of moving relative to the fixed frame 110, as will be explained below.

A forward facing surface 131 of the rear connecting member 114 includes a support hub 132 defining a support surface 134 configured to support the hub 20 when the rear connecting member 114 is coupled thereto. An annular flange 136 may extend outwardly of the support hub 132 adjacent a rearward end thereof. The support hub 132 may, in one embodiment, be generally cylindrical so as to correspond to the shape of bore 42 in the inner end 38 of the hub 20. It should be recognized that other shapes are possible, but that the shape of support hub 132 should generally correspond to the shape of the bore 42. The rear connecting member 114 further includes a generally elongated support shaft 138 extending forwardly from the support hub 132, the purpose of which will be described in more detail below.

With the transportation device 60 described as above, use of the transportation device 60 to load/unload and transport a wind turbine component, and more particularly a hub 20 of wind turbine 10, will now be described. As noted above, when the hub 20 is at a production facility, quayside, etc., the hub 20 will typically be in the first orientation wherein a hub surface defined by one of the planes P₁, P₂, and P₃ faces and contacts the support surface 54 which supports the hub 20. This is a stable orientation of hub 20 that resists relatively easy movement of hub 20 during, for example, storage. In accordance with an aspect of the invention, the transportation device 60 may be configured to couple to hub 20 when the hub 20 is in the first, load orientation. By way of example, the first, load orientation is depicted in Figs. 4A-4C.

In accordance with an exemplary method, and as illustrated in Fig. 4A, the front trailer portion 66 is positioned adjacent the outer end 40 of the hub 20 and generally aligned with the bore 46 therein, and the rear trailer portion 68 is positioned adjacent the inner end 38 of the hub 20 and generally aligned with the bore 42 therein. In this regard, when there is no load coupled to the connecting members 74, 114, actuation of primary lift actuators 86, 122 does not effectuate movement of the movable frames 72, 112. Instead, when the front and rear trailer portions 66, 68 are unloaded, actuation of primary lift actuators 86, 122 rotates the connecting members 74, 114 about pivot axes 92, 128, respectively, without potentially moving movable frames 72, 112. To effectuate movement of movable frames 72, 112 when unloaded, the secondary lift actuators 87, 123 may be used.

More particularly, as illustrated in Figs. 4A and 4B, to couple the front trailer portion 66 to the hub 20, it is desirable to have the front connecting member 74 positioned such that the support shaft 102 thereof generally aligns with the bore 46 in the outer end 40. Depending on the initial position of the front connecting member 74, this may be accomplished, for example, by actuating secondary lift actuator 87 so as to move the front connecting member 74 downward toward the support surface 54. More particularly, the secondary lift actuator 87, which may be configured to contact the fixed frame 70, may be actuated so as shorten or reduce its length. As one of ordinary skill in the art will appreciate, when the length of the actuator 87 is decreased, the movable frame 72 pivots about axis 82 so as to move the rear end 84 thereof downwardly toward the support surface 54.

Conversely, it will further be appreciated that when the length of the actuator 87 is increased, the movable frame 72 pivots about axis 82 so as to move the rear end 84 thereof upwardly away from the support surface 54. In this regard, the transportation device 60 may include a controller, shown schematically at 140, for controlling the operation of the lift actuator 87. The controller 140 may be, for example, a computer or other such device capable of controlling the operation of the lift actuator 87 for moving the movable frame 72 (and thus the front connecting member 74) to a desired position. When so aligned, the front trailer portion 66 may be moved so that the support shaft 102 extends through the bore 46 in the outer end 40 of hub 20.

In a similar manner, the rear connecting member 114 may be generally vertically aligned such that the support shaft 138 generally aligns with the bore 42 in the inner end 38. Again depending on the initial position of the rear connecting member 114, this may be accomplished, for example, by actuating secondary lift actuator 123 so as to move the rear connecting member 114 downward toward the support surface 54. The secondary lift actuator 123 may operate similarly to secondary lift actuator 87. More particularly, the lift actuator 123 may be actuated so as to reduce its length and pivot the movable frame 112 about axis 118 such that the front end 120 thereof moves downwardly toward the support surface 54. In this regard, the secondary lift actuator 123 may be operatively coupled to controller 140 or coupled to another similarly configured controller (not shown) for controlling the operation of the secondary lift actuator 123. When so aligned, the rear trailer portion 68 may be moved so that the support shaft 138 extends through the bore 42 in the inner end 38 of hub 20.

As best illustrated in Fig. 4C, the front trailer portion 66 may be positioned such that the support hub 98 of the front connecting member 74 is snugly received in the bore 46 at the outer end 40 of the hub 20 and at least a portion of the wall(s) that define bore 46 closely confront the support surface 100 of the support hub 98. Additionally, the rear trailer portion 68 may be positioned such that the support hub 132 of the rear connecting member 114 is snugly received in the bore 42 at the inner end 38 of the hub 20 and at least a portion of the wall(s) that define bore 42 closely confront the support surface 134 of the support hub 132. When the support hubs 98, 132 are positioned in their respective bores 46, 42, the support shafts 102, 138 may be adjustably coupled together.

In this regard, one of the support shafts 102, 138 may be generally tubular (e.g., having a central opening therein) so as to telescopically receive the other of the support shafts 102, 138 therein. In the figures, support shaft 138 receives support shaft 102 therein, but this is merely exemplary. The support shafts 102, 138 may be coupled together by one or more (one shown) locking pins, shown schematically at 142. The support shafts 102, 138 are coupled at a location that maintains the support hubs 98, 132 in their respective bores 46, 42. Thus, the front trailer portion 66 and the rear trailer 68 portion may be coupled together (e.g., structurally) through the support shafts 102, 138, and possibly through the hub 20 as well.

With the hub 20 coupled to the front and rear connecting members 74, 114, the hub 20 may be raised off the support surface 54, as illustrated in Fig. 4D. In this regard, when the front and rear trailer portions 66, 68 are loaded with hub 20, the primary lift actuators 86, 122 may be actuated in a coordinated manner so as to move the hub 20 in a generally vertical direction away from the support surface 54. For example, the primary lift actuators 86, 122 may be operatively coupled to controller 140 or other controller (not shown) for controlling the operation of primary lift actuators 86, 122 so as to lift hub 20.

More particularly, the lift actuators 86, 122 may be actuated so as to increase the length of the actuators 86, 122. As one of ordinary skill in the art will appreciate, when the length of the primary lift actuators 86, 122 is increased, the movable frames 72, 112, rotate about their respective axes 82, 118 so as to move the ends 84, 120 thereof upwardly and away from the support surface 54. However, due to the pivot coupling between the connecting members 74, 114 and their respective movable frames 72, 112, (e.g., at pivot axes 92, 128) and that the support shafts 102, 138 are coupled via locking pin 142, the connecting members 74, 114 are able to rotate about axes 92, 128 as the movable frames 72, 112 are rotating upwardly so as to maintain a secure coupling between the support hubs 98, 132 and bores 46, 42. In other words, the connecting members 74, 114 are able to adjust so as to maintain the support shafts 102, 138 in a nearly fixed position as the hub 20 is being raised. For example, in a raised position of the hub 20 (Fig. 4D), the support shafts 102, 138 may be nearly parallel to the support surface 54. Additionally, because the hub 20 is configured to be in a stable position when in the first, load orientation, when the hub 20 is moved to the raised position, the hub 20 is not expected to rotate about axis 48 and relative to the support hubs 98, 132 under, for example, its own weight.

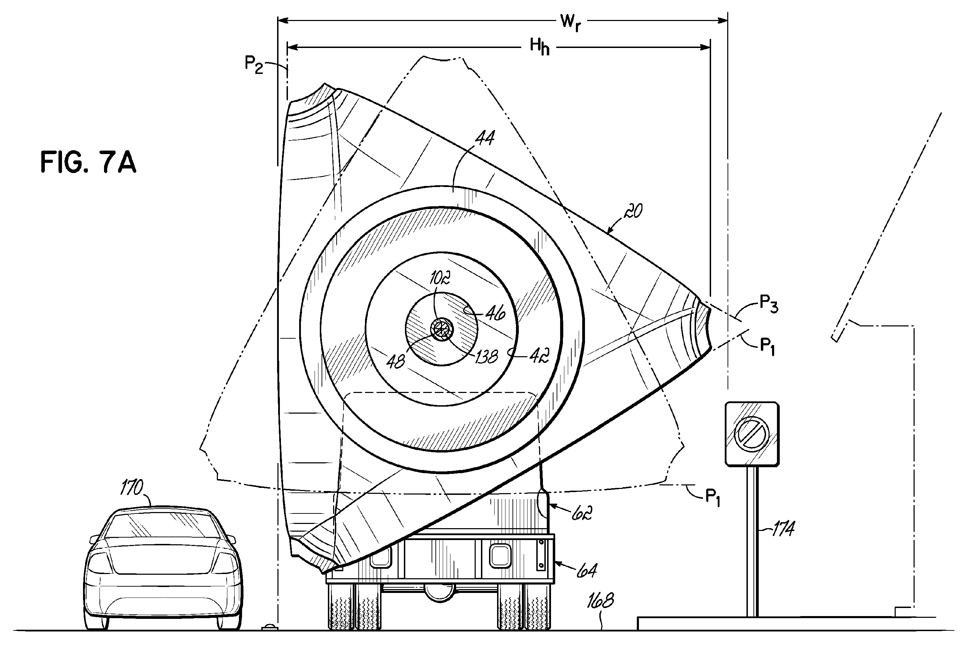

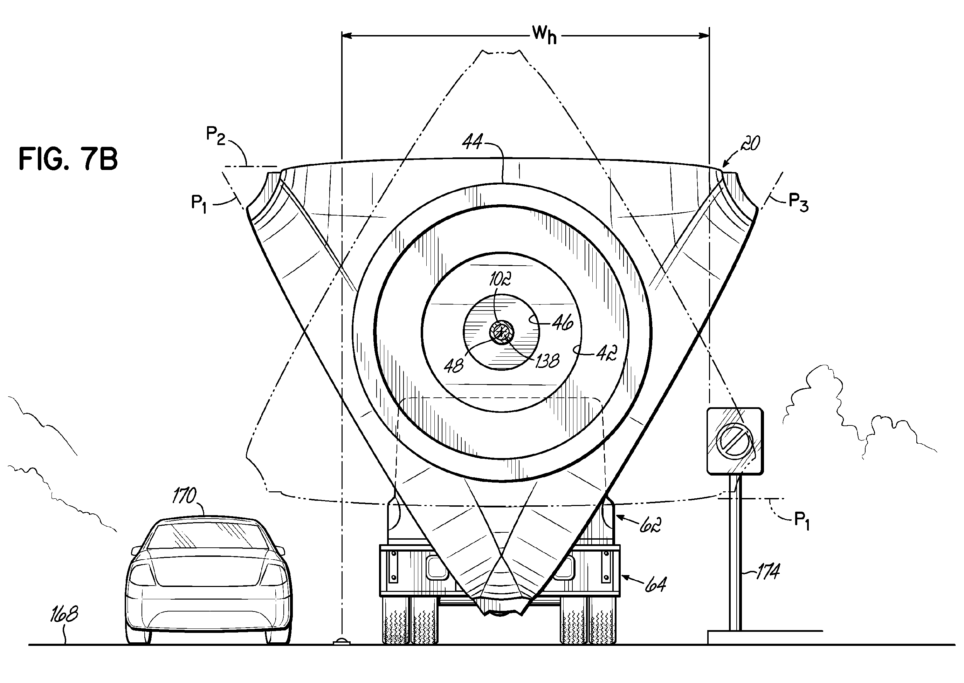

It should be realized that in the first, load orientation of hub 20, and when mounted on the transportation device 60, the maximum width of the hub 20 is at the lower most vertical position of the hub 20. This then places the maximum width of the hub 20 at a location where it can potentially interfere with adjacent traffic and/or potentially interfere with adjacent road signage (see the hub drawn in phantom in Figs. 7A and 7B, for example). It is just such a situation that is undesirable for the reasons provided above, and to which a solution is being sought. Aspects of the invention provide this solution.

As illustrated in Fig. 4D, and in accordance with an aspect of the invention, with the hub 20 mounted to the transportation device 60 and in the raised position, the hub 20 may be rotated so as to position the hub 20 in an optimum or desirable orientation for transport of the hub 20 along the existing network of roads and to, for example, a wind turbine installation site or quayside. For example, Fig. 4E illustrates transportation of the hub 20 after it has been rotated to a desirable orientation. It should be recognized that the reorientation of the hub 20 may occur prior to transportation, such as immediately after loading the hub 20 on transportation device 60. Additionally, or alternatively, the hub 20 may be reoriented during transportation. For example, the specific circumstances encountered during transportation may dictate when the hub 20 should be reoriented.

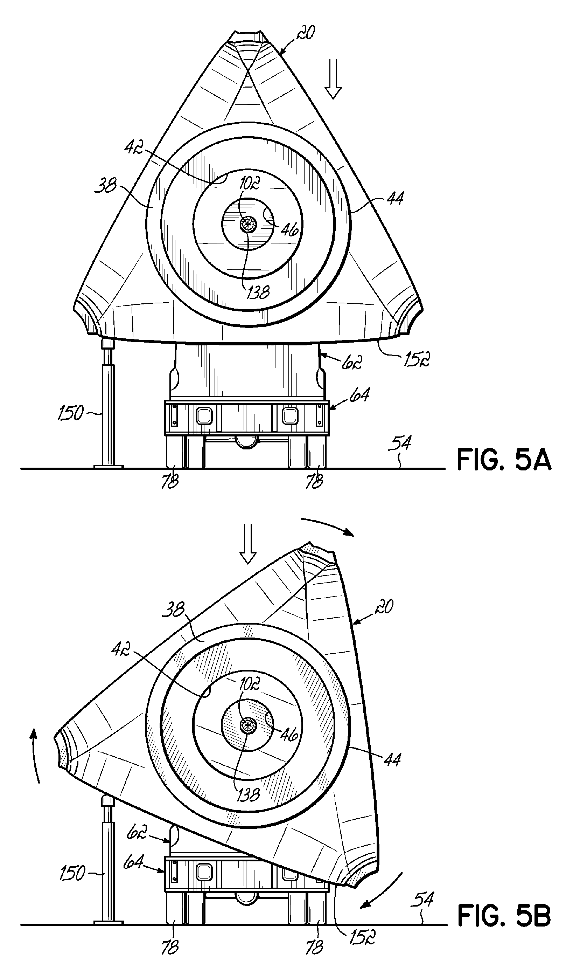

In accordance with various embodiments of the invention, it is contemplated that the hub 20 may be rotated about axis 48 in several ways. One such exemplary method is schematically shown in Figs. 5A-5D. In this method, when the hub 20 is in the raised position, such as that shown in Fig. 4D, one or more fixed obstacles 150 may be strategically located beneath a portion of the hub 20, such as to one side thereof, depending on the desired rotational direction. The fixed obstacles 150 may include fixed height blocks, or adjustable obstacles, such as a jack, lift or similar device. With the obstacle 150 so positioned, the hub 20 may be lowered by the transportation device 60 so that a portion of the hub 20 above the obstacle 150 contacts the obstacle 150, thus restricting any further downward movement of that portion of the hub 20. However, when the hub 20 contacts the obstacle 150, another portion of the hub 20, generally shown at 152, remains unsupported above the support surface 54 and therefore capable of further downward movement. Thus, with further downward movement of the hub 20, the net effect is that the hub 20 rotates about axis 48, as is illustrated in the progression from Fig. 5A to Fig. 5B. This rotation about axis 48 may continue, for example, until the downward motion of the hub 20 is stopped or another portion of the hub 20 contacts the support surface 54.

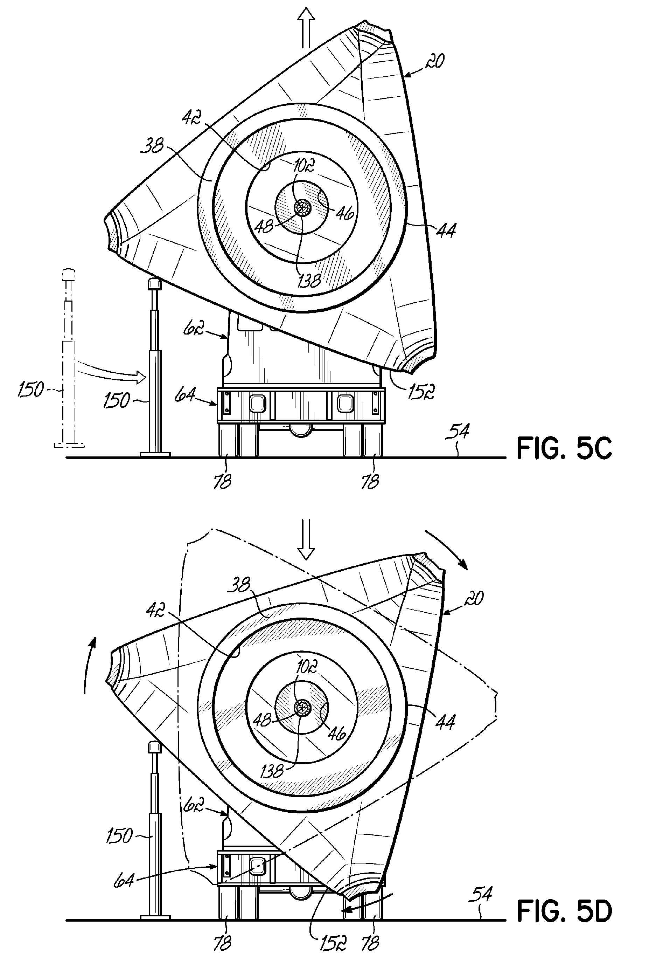

While the hub 20 may be in an intermediate orientation that may not be stable relative to, for example, gravity, it is expected that the hub 20 will not rotate on support hubs 98, 132 due to the friction fit between the support hubs 98, 132 and the bores 46, 42 in which they are snugly received. At this point, the transportation device 60 may be used to once again raise the hub 20 in the generally vertical direction. More specifically, the process of locating an obstacle 150 beneath a portion of the hub 20 and lowering the hub 20 may be used repeatedly until the hub 20 is in the desired orientation, such as in the second, transport orientation. This is illustrated in Figs. 5C and 5D. It will be appreciated that different sized obstacles 150 may be used in these subsequent steps in order to rotate the hub 20 about its axis 48 to the desired orientation.

Although the friction between the hub 20 and connecting members 74, 114 is considered sufficient to maintain the orientation of the hub 20 during repositioning of the hub 20 in the desired orientation, the hub 20 may be positively secured to at least one of the connecting members 74, 114 once in the desired orientation. By way of example, the rear connecting member 114 may include a blind threaded bore (not shown) that may be aligned with a bore 154 through the flange 44 of the hub 20 (Figs. 3A and 3B). A threaded bolt or the like (not shown) may be inserted into the bore 154 and blind threaded bore in the rear connecting member 114 to secure the hub 20 thereto and prevent any further rotation of the hub 20. Those of ordinary skill in the art may recognize other methods to fix the position of the hub 20 on the transportation device 60 when in the desired orientation. For example, a clamping device may be used to secure the hub 20 in a fixed orientation.

Aspects of the invention are not limited to the method described above for rotating the hub 20 while mounted on the transportation device 60. For example, in an alternative embodiment, and as illustrated in Fig. 6, the transportation device 60 may include a drive system, schematically shown at 160, for rotating the hub 20 when it is mounted on the transportation device 60. In this regard, the drive system 160 may include a motor 162 operatively coupled to a drive wheel 164 and configured to rotate the drive wheel 164 as illustrated in the figure. The drive wheel 164 may, in turn, be operatively coupled to the hub 20 such that rotation of the drive wheel 164 rotates the hub 20 about axis 48. The coupling, in one embodiment, may be effectuated through a frictional engagement. In an alternative embodiment (not shown), the drive wheel 164 may instead be coupled to one of the connecting members 74, 114 such that rotation of the driving wheel 164 rotates one of the connecting members 74, 114, and thereby, the hub 20.

In one embodiment, and as illustrated in the figures, the drive wheel 164 may be operatively coupled to the hub 20 adjacent the rear connecting member 114 such as at flange 44. Alternatively, the drive wheel 164 may be operatively coupled to the support hub 132 of the rear connecting member 114. In this regard, it should be recognized that the support hub 132 may be rotatably supported on the rear connecting member 114 by, for example, bearings such that at least the support hub 132 may rotate relative to the movable frame 112. In these embodiments, the motor 162 may be operatively coupled to a controller, such as controller 140, for controlling the motor 162, and thereby controlling the rotation of the hub 20 through actuation thereof.

It should be recognized that although the drive system 160 is described above as positioned adjacent the rear connecting member 114 for rotating the hub 20 directly or rotating the support hub 132 to which the hub 20 is coupled, the drive system 160 may alternatively be coupled adjacent the front connecting member 74. A drive system 160 may also be coupled adjacent to each of the connecting members 74, 114 for rotating the hub 20 either directly or indirectly (e.g., through the support hubs 98, 132). Both drive systems may be operatively coupled to the same controller 140 so as to coordinate the rotation of the hub 20. Additionally, the drive system 160 may have other arrangements and be within the scope of the present invention. For example, the drive wheel may include a toothed drive gear that meshes with a toothed gear associated with the support hub 132 so as to cause rotation of the support hub 132 with rotation of the drive gear (not shown). Still further, the drive wheel may be operatively coupled to the support hub 132 via a linkage, such as a belt or chain pulley arrangement (not shown). There may be additional drive systems for actively rotating the hub 20 directly or indirectly while the hub 20 is mounted on the transportation device 60.

In still a further alternative embodiment, in a more basic form in accordance with aspects of the invention, it is contemplated that in certain applications, the hub 20 may be manually rotated about its axis 48 when mounted on the transportation device 60. In this regard, the support hubs 98, 132 may be in a fixed position such that the bores 46, 42 must slide relative to the support hubs 98, 132 to effectuate rotation. Alternatively, one or both of the support hubs 98, 132 may include a bearing or other mechanism that allow the support hubs 98 and/or 132 to rotate with rotation of the hub 20. In any event, due to the sheer size of wind turbine components, it is contemplated that it would take several workers to accomplish a manual rotation of the hub 20 when mounted on the transportation device 60.

Due to the ability to rotate the hub 20 when it is mounted on the transportation device 60, the orientation of the hub 20 may be selected depending on the particular situation presented by transportation of the hub 20 to a wind turbine installation site or quayside using the existing network of roads. In this regard, Fig. 7A illustrates the hub 20 when in the second, transport orientation as described above. Recall that in this orientation, the minimum hub dimension, such as the height dimension Hₕ, is generally parallel to the working width Wᵣ of the road 168 (e.g., generally horizontal). As noted in this figure, in this second, transport orientation, the surface of the hub 20 that faces vehicles 170 in an adjacent lane 172 is one of the planar surfaces, P₂, for example. In this way, the hub 20 extends primarily in the vertical direction, as opposed to the horizontal direction, and therefore it is believed that interference with adjacent vehicles 170 will be minimized.

As further illustrated in Fig. 7A, the opposite side of hub 20 includes the intersection between the other planar portions of the hub 20 (e.g., those formed by P₁, and P₃) and does project outboard of the tractor 62 and trailer 64 (the rear portion of which is omitted for clarity). However, because the hub dimension in a direction generally parallel to the road (e.g., Hₕ) is the minimum hub dimension, for some applications, this dimension may be less than the working width Wᵣ of the road 168 (even in the case where the other dimensions are not less than the working width Wᵣ of the road 168). In that case, and with the hub 20 in the second, transport orientation, the hub 20 may traverse across road 168 while minimizing or reducing the potential for damage to the road signage, schematically shown at 174. For example, as shown in phantom in Fig. 7A, when the hub 20 is in the first, load orientation, the hub 20 may interfere with vehicles 170 in an adjacent lane 172 and/or damage or destroy road signage 174. By way of contrast, and as noted above, when in the second, transport orientation, the potential for the hub 20 to interfere with vehicles 170 in an adjacent lane 172 or damage road signage 174 has been reduced.

Fig. 7B illustrates the hub 20 when in the third, transport orientation as described above. Recall that in this orientation, the maximum width dimension of the hub 20 is placed at the upper most vertical position of the hub 20. In other words, in this third, transport orientation, the surface of the hub 20 that forms one of the planar surfaces, P₂ for example, faces upwardly. As shown in this figure, the width of the hub 20 then progressively decreases in a vertically downward direction toward the road 168. At vertical heights about the road 168 relevant to most vehicles 170 and most road signage 174, the width of the hub 20 in a direction generally parallel to the road is less than the working width Wᵣ of the road 168. In other words, the wide portions of the hub 20 are placed at a vertical height that will clear most road signage174 and most vehicles 170. In this way, with the hub 20 in the third, transport orientation, the hub 20 may traverse across the road 168 while minimizing or reducing potential interference with adjacent vehicles 170 and minimizing or reducing the potential for damage to the road signage 174. For example, as shown in phantom in Fig. 7B, when the hub 20 is in the first, load orientation, the hub 20 may interfere with vehicles 170 in an adjacent lane 172 and/or damage or destroy road signage 174. By way of contrast, and as noted above, when in the third, transport orientation, the potential for the hub 20 to interfere with vehicles 170 in an adjacent lane 172 and/or damage road signage 174 has been reduced.

Figs. 7A and 7B provide two exemplary orientations of hub 20 that provide certain benefits during transportation of the hub 20 to a wind turbine installation site or quayside via the existing network of roads. It is foreseeable that circumstances may arise during transit that result in yet another orientation that may provide a beneficial outcome. Thus, the invention is not limited to the two orientations shown in Figs. 7A and 7B. The point is that the ability to load/unload the hub 20 using the transportation device and to rotate the hub 20 while it is mounted on the transportation device 60 either prior to or during transit provides an increased level of flexibility not provided in prior transportation devices. It is believed that this flexibility will allow wind turbine manufacturers to continue transporting wind turbine components to installation sites or quayside using the existing network of roads moving forward, even as the physical size of these components increases.

When the hub 20 arrives at the wind turbine installation site or quayside, aspects of the present invention may provide benefits in the unloading process as well. In this regard, it may be desirable to unload the hub 20 onto a support surface at the installation site in a stable orientation, such as, for example, the first, load orientation. This may be readily achieved using the transportation device 60 as described above. More particularly, the hub 20 may be rotated while mounted on the transportation device 60 back to the first orientation (e.g., shown in phantom in Figs. 7A and 7B). This rotation may be achieved, for example, by reversing the steps as described above. It is believed unnecessary to describe this in further detail as one of ordinary skill in the art will readily understand reversing the rotation operation based on that above. Once the hub 20 is rotated back to the first orientation, the hub 20 may be vertically lowered so as to rest on the support surface. Again, it is believed unnecessary to describe this lowering process in further detail as one of ordinary skill in the art will readily understand the process based on the description above.

While the invention has been illustrated by a description of various embodiments, and while these embodiments have been described in considerable detail, it is not the intention of the applicant to restrict or in any way limit the scope of the appended claims to such detail. Additional advantages and modifications will readily appear to those skilled in the art. For example, while aspects of the invention have been described with the wind turbine component configured as a rotor hub, the invention is not so limited. In this regard, the transportation device and method disclosed herein may prove beneficial in the transportation of other wind turbine components. Additionally, while the front and rear trailer portions are described as being coupled via rigid shafts, it should be realized that the trailer portions may be coupled by other mechanical members, such as elongate cables. The invention in its broader aspects is therefore not limited to the specific details, representative methods, and illustrative examples shown and described. Accordingly, departures may be made from such details without departing from the spirit or scope of the general inventive concept.

## Claims

1. A method of transporting a wind turbine component using an existing network of roads, comprising:
loading the wind turbine component on a transportation device using the transportation device, the wind turbine component being in a first orientation when loaded on the transportation device;
reorienting the wind turbine component to a second orientation while the wind turbine component is mounted on the transportation device; and
using the transportation device to transport the wind turbine component via the existing network of roads.

2. A method according to claim 1, wherein the reorienting step occurs prior to or during transportation of the wind turbine component.

3. A method according to claim 1 or 2, wherein the wind turbine component includes a rotor hub.

4. A method according to any of the preceding claims, wherein loading the wind turbine component on the transportation device further comprises coupling the transportation device to the wind turbine component while the wind turbine component is in a storage position on a support surface.

5. A method according to claim 4, further comprising raising the wind turbine component off the support surface to a raised position using the transportation device.

6. A method according to any of the preceding claims, wherein the wind turbine component has a rotation axis and reorienting the wind turbine component further comprises rotating the wind turbine component about its rotation axis.

7. A method according to claim 6, wherein rotating the wind turbine component further comprises:
a) raising the wind turbine component using the transportation device;
b) locating an obstacle under a portion of the wind turbine component;
c) lowering the wind turbine component using the transportation device so that the portion of the wind turbine component contacts the obstacle; and
d) further lowering the wind turbine component using the transportation device to effectuate rotation of the wind turbine component about the rotation axis.

8. A method according to claim 7, further comprising repeating steps a) - d) to rotate the wind turbine component at least a portion of the way from the first orientation to the second orientation.

9. A method according to claim 6, wherein rotating the wind turbine component further comprises activating a drive system to effectuate rotation of the wind turbine component about the rotation axis.

10. A method according to any of the preceding claims, wherein the second orientation is **characterized by** having the widest portion of the wind turbine component at the highest vertical position when viewed from a front or rear perspective.

11. A method according to any of claims 1-9, wherein the road includes a working width and the wind turbine component includes at least one dimension less than the working width, the second orientation having the at least one dimension of the wind turbine component generally parallel to the working width of the road.

12. A method according to any of the preceding claims, further comprising reorienting the wind turbine component to a third orientation while the wind turbine component is mounted on the transportation device.

13. A method according to any of the preceding claims further comprising unloading the wind turbine component from the transportation device using the transportation device.

14. A transportation device for transporting a wind turbine component using an existing network of roads, comprising:
a trailer having a front trailer portion and a rear trailer portion, each of the front and rear trailer portions including a fixed frame having a plurality of wheels, a movable frame coupled to the fixed frame, lift actuators for moving the movable frame relative to the fixed frame, and a connecting member coupled to the movable frame and configured to couple to the wind turbine component; and
a drive system for rotating the wind turbine component about a rotation axis when the wind turbine component is mounted on the transportation device.

15. A transportation device according to claim 14 further comprising a controller operatively coupled to the drive system for controlling the rotation of the wind turbine component.

16. A method of transporting a wind turbine component using an existing network of roads, comprising:
obtaining a transportation device including a trailer having a front trailer portion and a rear trailer portion, each of the front and rear trailer portions including a fixed frame having a plurality of wheels, a movable frame coupled to the fixed frame, a first and second lift actuator for moving the movable frame relative to the fixed frame, and a connecting member coupled to the movable frame and configured to couple to the wind turbine component;
actuating the second lift actuators to move each of the connecting members to a lowered position;
coupling each of the connecting members to the wind turbine component when in the lowered position, the wind turbine component having a first orientation when it is coupled to each of the connecting members;
actuating the first lift actuators to move each of the connecting members and the wind turbine component coupled thereto to a raised position;
rotating the wind turbine component about a rotation axis to a second orientation while the wind turbine component is mounted on the transportation device; and
using the transportation device to transport the wind turbine component via the existing network of roads.

17. A method according to claim 16, wherein the rotating step occurs prior to or during transportation of the wind turbine component.

18. A method according to claim 16 or 17, wherein the road includes a working width and the wind turbine component includes at least one dimension less than the working width, the second orientation having the at least one dimension of the wind turbine component generally parallel to the working width of the road.

19. A method according to any of claims 16-18, further comprising rotating the wind turbine component about the rotation axis to a third orientation while the wind turbine component is mounted on the transportation device.

20. A method according to any of claims 16-19, further comprising:
actuating the first lift actuators to move each of the connecting members and the wind turbine component coupled thereto to the lowered position; and
de-coupling each of the connecting members from the wind turbine component when in the lowered position.
